# EUROPEAN PATENT SPECIFICATION

(11) **EP 1 585 930 B1**
(45) Date of publication and mention of the grant of the patent: **13.08.2008**
(21) Application number: 03783818.2
(22) Date of filing: 08.12.2003
(51) Int. Cl.: F41A 27/08, F16C 23/08

(54) **TRUNNION ASSEMBLY**
ANORDNUNG EINES SCHILDZAPFENS
ENSEMBLE TOURILLON

(30) Priority: 13.01.2003 ZA 200300326
(43) Date of publication of application: 19.10.2005
(73) Proprietor: DENEL (PTY) LTD, 0182 Pretoria (ZA)
(72) Inventor: MEINTJES, Pieter Johannes, 0157 Pretoria (ZA)
(74) Representative: Vleck, Jan Montagu
(86) International application number: PCT/ZA2003/000183
(87) International publication number: WO 2004/063657

(56) References cited:
- EP-A- 1 217 323
- GB-A- 1 493 632
- US-A- 1 742 436
- US-A- 4 440 061
- US-A- 4 699 528
- US-A- 5 062 347

## Description

### INTRODUCTION AND BACKGROUND TO THE INVENTION

This invention relates to a trunnion assembly.

A conventional gun, such as a cannon or the like, includes two trunnion assemblies for supporting the barrel of the gun. The trunnion assemblies are disposed on opposite sides of the barrel and each assembly includes a trunnion shaft rotatably received in a bore of a trunnion housing mounted on a support. The trunnion shaft is pivotally movable in the bore about its longitudinal axis to accommodate elevation of the barrel of the gun, however, its longitudinal axis is retained against movement out of concentric alignment with the longitudinal axis of the bore.

A disadvantage of the conventional trunnion assemblies is that when the gun is fired, the impetus caused by the rearward movement of the gun is transferred via the trunnion shafts and the trunnion housings to the static components of the support. Excessive metal fatigue is thus caused, often resulting in the trunnion shafts being ripped out of the housings.

### OBJECT OF THE INVENTION

It is therefore an object of the present invention to provide a trunnion assembly with which the aforesaid disadvantage can be overcome or at least minimised.

### SUMMARY OF THE INVENTION

US-A-4, 699, 528 discloses a rotary assembly including a shaft, a housing, and a bearing interposed between shaft and housing to provide radial support while also permitting relative rotation. US 4, 699, 528 permits optimum operation of the bearing, by permitting the bearing to be self-positioned even though slightly out of alignment with either the shaft or the housing, or both.

GB-A-1, 493, 632 discloses a trunnion assembly for a gun comprising:
- a trunnion shaft;
- a housing defining a bore for rotatably and concentrically receiving the trunnion shaft; and
- a bearing assembly located inside the housing and surrounding the trunnion shaft,
the arrangement being such that the longitudinal axis of the shaft is movable out of alignment with the longitudinal axis of the bore when the shaft is biased in a direction transverse the said longitudinal axes and in that the bearing assembly allows rotation of the shaft in the bore whilst also allowing the said movement of the longitudinal axis of the shaft out of alignment with the longitudinal axis of the bore.

According to a first aspect of the invention there is provided a trunnion assembly as defined in claim 1. Preferred features of the invention are set out in dependent claims 2 to 6.

The bearing assembly may include a toroidal-type roller bearing assembly.

The re-alignment means may be in the form of a ball bearing assembly also located inside the bore of the housing and surrounding the trunnion shaft.

The ball-bearing assembly may include a central ball bearing and two resiliently compressible O-rings disposed on opposite sides of the ball bearing.

The O-rings may each be located in an O-ring retainer.

A cam ring may be disposed between each O-ring and the ball bearing, each cam ring having a cam surface for abutting an outer surface of the ball-bearing, the arrangement being such that when the trunnion shaft moves out of concentric alignment with the bore, one of the cam rings moves towards its O-ring to compress the same, the arrangement being further such that the compressed O-ring expands after the biasing force has been neutralised to move the shaft back into concentric alignment with the bore.

According to a second aspect of the invention there is provided a gun provided with a trunnion assembly according to the first aspect of the invention.

### BRIEF DESCRIPTION OF THE DRAWINGS

The invention will now be described further by way of a non-limiting example with reference to the accompanying drawings wherein:
- figure 1: is a perspective view of a trunnion assembly according to a preferred embodiment of the invention;
- figure 2: is an exploded view of the trunnion assembly of figure 1;
- figure 3A: is a longitudinal-sectional view along lines A-A in figure 1, with a longitudinal axis B of a shaft and a longitudinal axis C of a bore aligned;
- figure 3B: is a longitudinal-sectional view along lines A-A in figure 1 with the longitudinal axis B of the shaft and the longitudinal axis C of the bore misaligned;
- figure 4: is a detailed view of a bearing assembly of the trunnion assembly of figure 1;
- figure 5A: is a front view of an internal O-ring retainer of a re-alignment means of the bearing assembly of figure 4;
- figure 5B: is a cross-sectional view along lines V-V in figure 5A;
- figure 5C: is a detailed view of the section as indicated in figure 5B;
- figure 6A: is a front view of an external O-ring retainer of the re-alignment means referred to in figure 5A;
- figure 6B: is a cross-sectional view along lines VI-VI in figure 6A;
- figure 6C: is a detailed view of the section as indicated in figure 6B;
- figure 7A: is a front view of a cam ring of the re-alignment means referred to in figure 5A;
- figure 7B: is a cross-sectional view along lines VII-VII in figure 7A; and
- figure 7C: is a detailed view of the section as indicated in figure 7B.

### DESCRIPTION OF A PREFERRED EMBODIMENT OF THE INVENTION

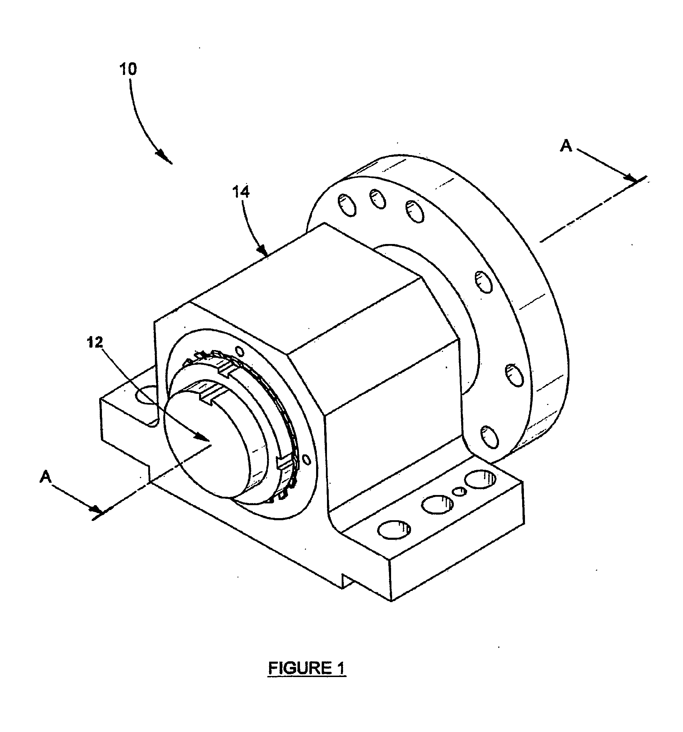

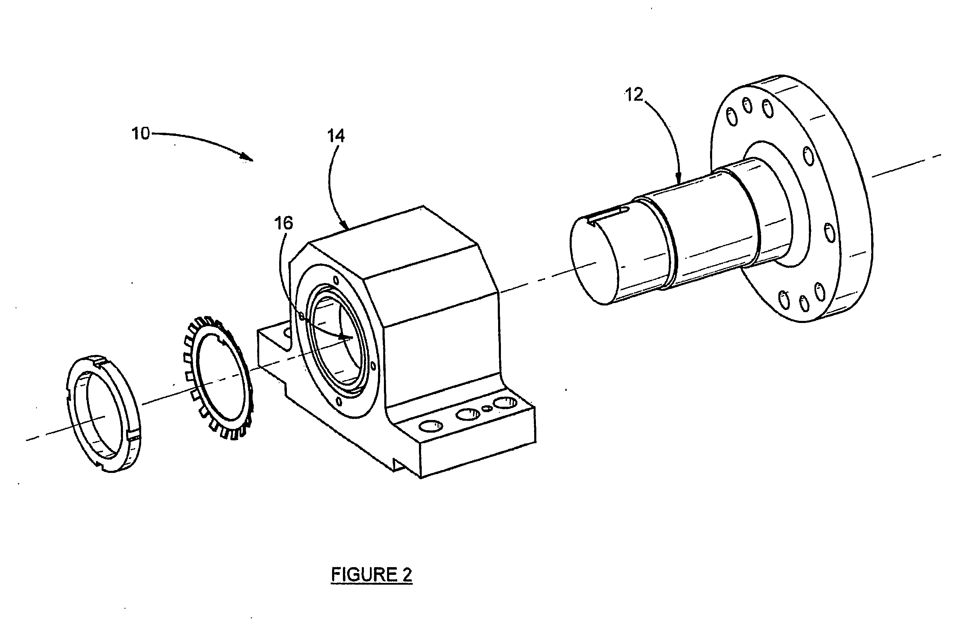

Referring to figures 1 to 3, a trunnion assembly according to a preferred embodiment of the invention is generally designated by reference numeral 10.

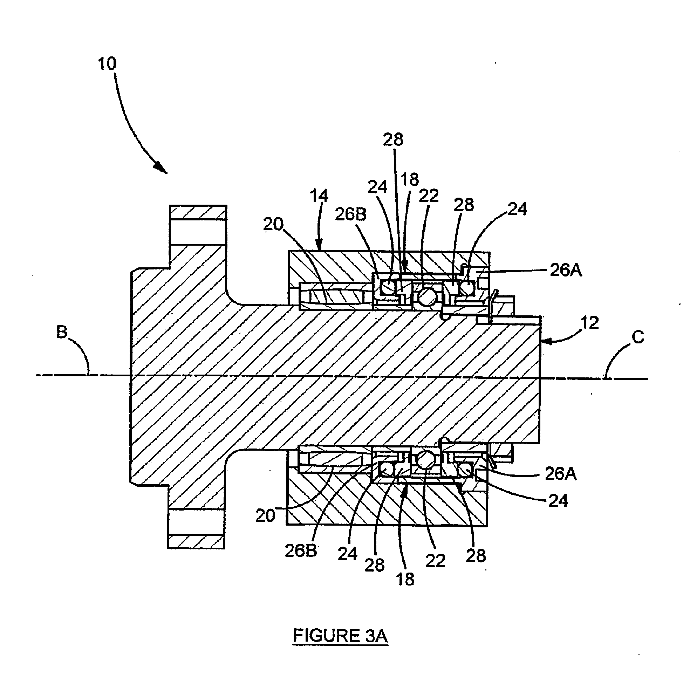

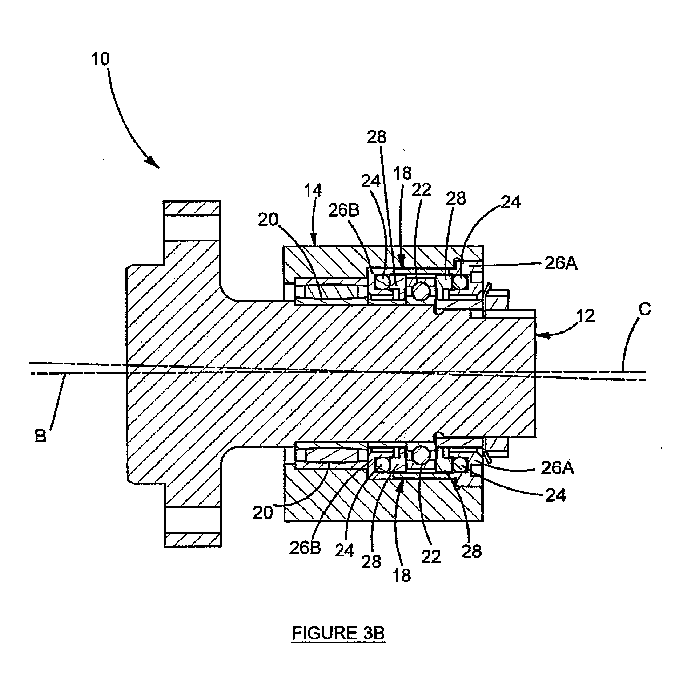

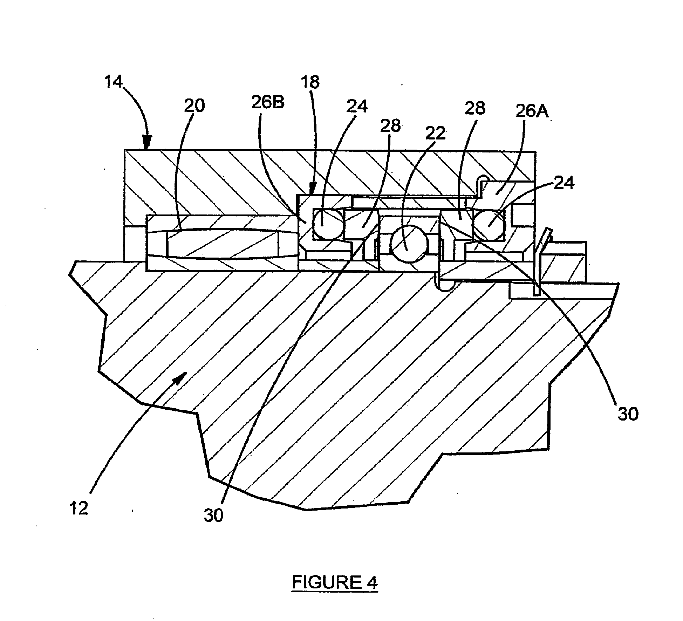

The trunnion assembly 10 comprises a trunnion shaft 12; and a housing 14 defining a bore 16 for rotatably and concentrically receiving the trunnion shaft 12. Referring to figures 3 and 4, the trunnion assembly 10 further includes a bearing assembly 18 located inside the housing 14 and surrounding the trunnion shaft 12. The bearing assembly 18 allows rotation of the shaft 12 in the bore 16 whilst also allowing movement of the shaft 12 so that the longitudinal axis B of the shaft 12 is movable out of alignment with the longitudinal axis C of the bore 16 when the shaft 12 is biased in a direction transverse the said longitudinal axes B and C.

The bearing assembly 18 includes a toroidal-type roller bearing assembly 20, which allows for concentric misalignment of the shaft 12 inside the bore 16. The bearing assembly 18 further includes a re-aligning means that re-aligns the longitudinal axis B of the shaft 12 with the longitudinal axis C of the bore 16, after the said misalignment, as indicated in figure 3B.

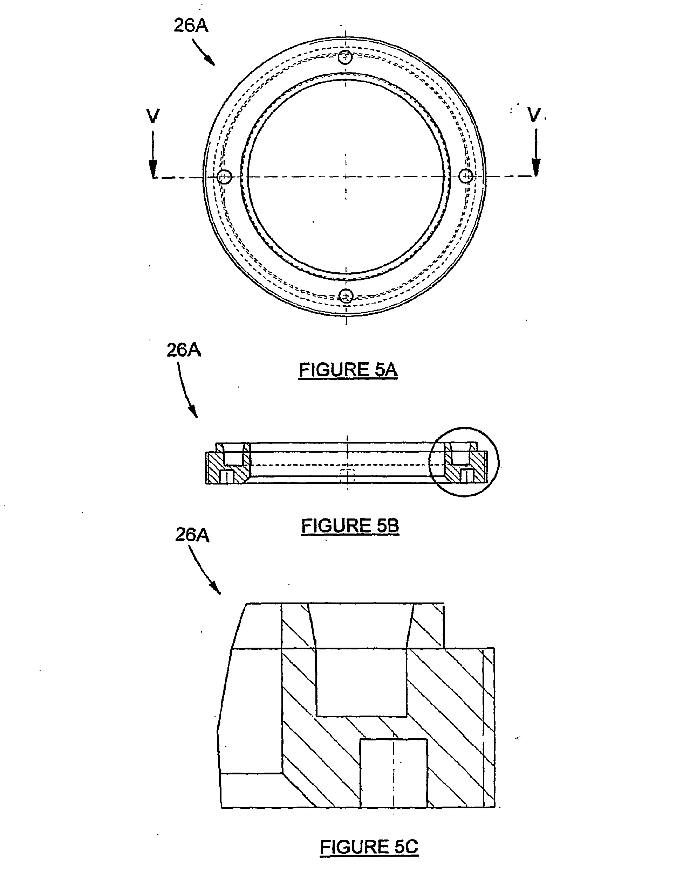

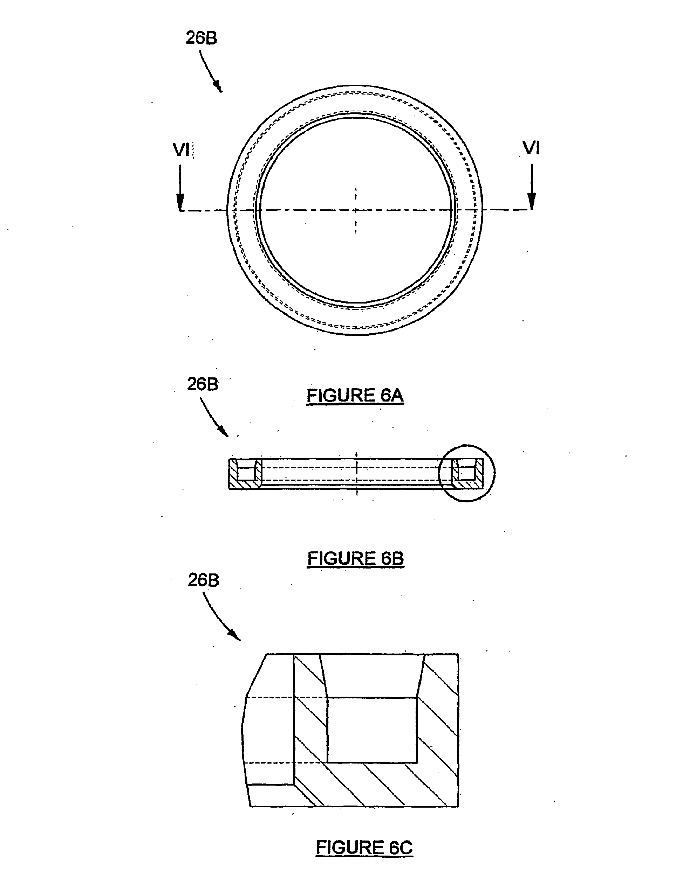

Referring further to figures 5 to 7, the re-alignment means includes a ball bearing assembly also located inside the housing 14 and surrounding the trunnion shaft 12. The ball-bearing assembly includes a central ball bearing 22 and two resiliently compressible O-rings 24. The O-rings 24 are each located in an O-ring retainer 26A and 26B, and disposed on opposite sides of the ball bearing 22. One O-ring retainer 26A is shown in more detail in figures 5A to 5C and the other O-ring retainer 26B is shown in more detail in figures 6A to 6C.

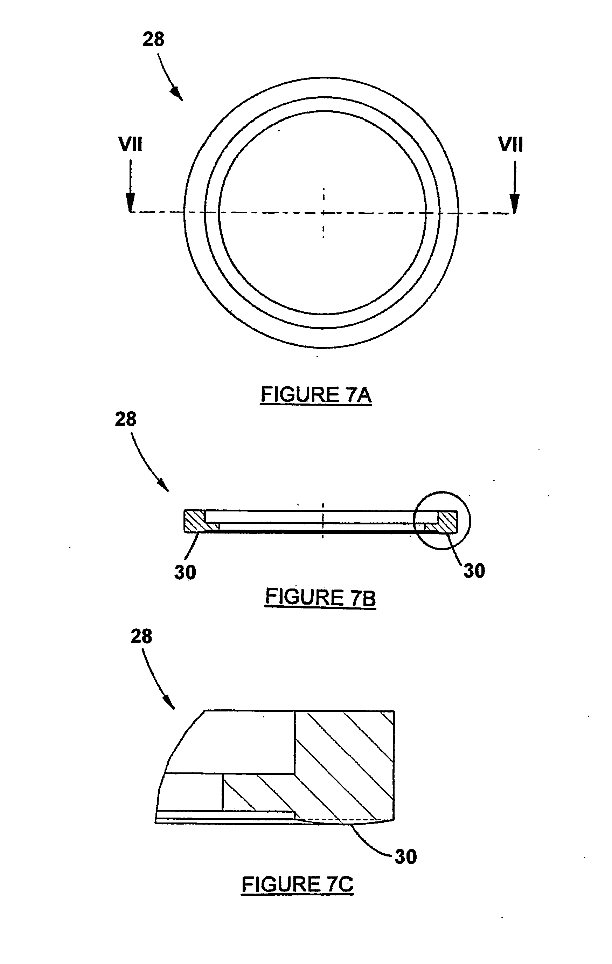

Referring particularly to figures 7A to 7C, a cam ring 28 is disposed between each O-ring 24 and the ball bearing 22. Each cam ring 28 has a cam surface 30 that abuts an outer surface of the ball-bearing 22. The cam surface 30 is rounded and aids in the re-alignment of the shaft 12.

Referring particularly to figure 3B, in use, when a gun (not shown) is fired, the longitudinal axis B of the trunnion shaft 12 moves out of alignment with the longitudinal axis C of the bore 16. Simultaneously, one of the cam rings 28 moves towards its O-ring 24 to compress the same in its retainer 26. Concomitantly the rollers of the toroidal-type roller bearing 20 are able to move at a misaligned angle in the raceways of the bearing 20, while being confined to the raceways. After compression, the O-ring 24 expands after the biasing force has been neutralised to move the longitudinal axis B of the shaft 12 back into alignment with the longitudinal axis C of the bore 16. This is achieved by the cam surface 30 of the cam ring 28 pressing against the outer surface of the ball-bearing 22.

The applicant has found that the trunnion assembly 10 allows for the longitudinal axis B of the shaft 12 to be movable out of alignment with the longitudinal axis C of the bore 16 when the shaft 12 is biased in a direction transverse the said longitudinal axes B and C, such as when the gun is fired. The applicant has further found that this will reduce the impetus caused by the rearward movement of gun, which is transferred to the static components of the support, and therefore alleviate excessive metal fatigue.

It will be appreciated that variations in detail are possible with a trunnion assembly according to the invention without departing from the scope of the appended claims.

## Claims

1. A trunnion assembly (10) for a gun comprising:
- a trunnion shaft (12);
- a housing (14) defining a bore (16) for rotatably and concentrically receiving the trunnion shaft (12); and
- a bearing assembly (18) located inside the housing (14) and surrounding the trunnion shaft (12),
the arrangement being such that the longitudinal axis (B) of the shaft (12) is movable out of alignment with the longitudinal axis (C) of the bore (16) when the shaft is biased in a direction transverse the said longitudinal axes (B, C) and in that the bearing assembly (18) allows rotation of the shaft in the bore whilst also allowing the said movement of the longitudinal axis of the shaft out of alignment with the longitudinal axis of the bore, the trunnion assembly according to the present invention being **characterised in that** the bearing assembly (18) is provided with a re-aligning means including a ball bearing assembly having at least one cam ring (28) disposed between an O-ring (24) and a ball bearing (22), for re-aligning the longitudinal axes (B,C) of the shaft (12) and the bore (16), after the said movement out of alignment.

2. A trunnion assembly according to claim 1 wherein the ball bearing assembly (18) is also located inside the bore (16) of the housing and surrounds the trunnion shaft (12) and wherein the cam ring (28) is a first cam ring and the O-ring (24) is a first O-ring, and wherein the ball-bearing assembly includes a second cam ring (28) disposed between a second O-ring (24) and the said ball bearing (22).

3. A trunnion assembly according to claim 2 wherein the O-rings (24) are resiliently compressible, the arrangement being such that the ball bearing (22) is disposed centrally between the two cam rings (28), with the two O-rings (24) disposed on opposite sides of the ball bearing (22), with a cam ring (28) being disposed between each O-ring (24) and the ball bearing (22) respectively.

4. A trunnion assembly according to claim 3 wherein each cam ring (28) defines a cam surface (30) for abutting an outer surface of the ball-bearing (22), the arrangement being such that, when the trunnion shaft (12) moves out of concentric alignment with the bore (16), one of the cam rings (28) moves towards its O-ring (24) to compress the same, the arrangement being further such that the compressed O-ring (24) expands after the biasing force has been neutralised to move the shaft (12) back into concentric alignment with the bore (16).

5. A trunnion assembly according to any one of claims 2 to 4 wherein the O-rings (24) are each located in an O-ring retainer (26A, 26B).

6. A trunnion assembly according to any one of claims 1 to 5 wherein the bearing assembly includes a toroidal-type roller bearing assembly (20).

7. A gun provided with a trunnion assembly according to any one of claims 1 to 6.

## Patentansprüche

1. Schildzapfenbaugruppe (10) für eine Waffe, die Folgendes umfasst:
eine Schildzapfenwelle (12);
ein Gehäuse (14), das eine Bohrung (16) zur drehbaren und konzentrischen Aufnahme der Schildzapfenwelle (12) definiert; und
eine Lagerbaugruppe (18), die sich in dem Gehäuse (14) befindet und die Schildzapfenwelle (12) umgibt,
wobei die Anordnung derart ist, dass die Längsachse (B) der Welle (12) aus der Fluchtung mit der Längsachse (C) der Bohrung (16) bewegbar ist, wenn die Welle in einer Richtung quer zu den genannten Längsachsen (B, C) vorgespannt wird, wobei die Lagerbaugruppe (18) eine Drehung der Welle in der Bohrung zulässt und auch die genannte Bewegung der Längsachse der Welle aus der Fluchtung mit der Längsachse der Bohrung zulässt, wobei die erfindungsgemäße Schildzapfenbaugruppe **dadurch gekennzeichnet ist, dass** die Lagerbaugruppe (18) mit einem Neuausrichtungsmittel versehen ist, das eine Kugellagerbaugruppe beinhaltet, wobei sich wenigstens ein Nockenring (28) zwischen einem O-Ring (24) und einem Kugellager (22) befindet, um die Längsachsen (B, C) der Welle (12) und der Bohrung (16) nach der genannten Bewegung aus der Fluchtung wieder auszurichten.

2. Schildzapfenbaugruppe nach Anspruch 1, wobei die Kugellagerbaugruppe (18) auch in der Bohrung (16) des Gehäuses liegt und die Schildzapfenwelle (12) umgibt und wobei der Nockenring (28) ein erster Nockenring und der O-Ring (24) ein erster O-Ring ist und wobei die Kugellagerbaugruppe einen zweiten Nockenring (28) zwischen einem zweiten O-Ring (24) und dem genannten Kugellager (22) beinhaltet.

3. Schildzapfenbaugruppe nach Anspruch 2, wobei die O-Ringe (24) elastisch komprimierbar sind, wobei die Anordnung derart ist, dass das Kugellager (22) zentral zwischen den beiden Nockenringen (28) liegt, wobei die beiden O-Ringe (24) auf entgegengesetzten Seiten des Kugellagers (22) liegen, wobei sich jeweils ein Nockenring (28) zwischen den jeweiligen O-Ringen (24) und dem Kugellager (22) befindet.

4. Schildzapfenbaugruppe nach Anspruch 3, wobei jeder Nockenring (28) eine Nockenfläche (30) zur Anlage an einer Außenfläche des Kugellagers (22) definiert, wobei die Anordnung derart ist, dass, wenn sich die Schildzapfenwelle (12) aus der konzentrischen Fluchtung mit der Bohrung (16) bewegt, einer der Nockenringe (28) sich in Richtung auf seinen O-Ring (24) bewegt, um diesen zu komprimieren, wobei die Anordnung ferner derart ist, dass sich der komprimierte O-Ring (24) nach dem Neutralisieren der Vorspannkraft ausdehnt, um die Welle (12) zurück in die konzentrische Fluchtung mit der Bohrung (16) zu bewegen.

5. Schildzapfenbaugruppe nach einem der Ansprüche 2 bis 4, wobei die O-Ringe (24) jeweils in einer O-Ring-Halterung (26A, 26B) liegen.

6. Schildzapfenbaugruppe nach einem der Ansprüche 1 bis 5, wobei die Lagerbaugruppe eine Rollenlagerbaugruppe (20) des Toroidtyps beinhaltet.

7. Waffe, die mit einer Schildzapfenbaugruppe nach einem der Ansprüche 1 bis 6 ausgestattet ist.

## Revendications

1. Ensemble de tourillon (10) pour un canon comprenant:
- un arbre de tourillon (12);
- un logement (14) définissant un alésage (16) destiné à recevoir l'arbre de tourillon (12) d'une manière rotative et concentrique; et
- un ensemble de roulement (18) situé à l'intérieur du logement (14) et entourant l'arbre de tourillon (12),
l'arrangement étant tel que l'axe longitudinal (B) de l'arbre (12) est déplaçable hors d'alignement avec l'axe longitudinal (C) de l'alésage (16) lorsque l'arbre est sollicité dans une direction transversale aux-dits axes longitudinaux (B, C) et que l'ensemble de roulement (18) permet la rotation de l'arbre dans l'alésage tout en permettant aussi ledit mouvement de l'axe longitudinal de l'arbre hors d'alignement avec l'axe longitudinal de l'alésage, l'ensemble de tourillon selon la présente invention étant **caractérisé en ce que** l'ensemble de roulement (18) est doté d'un moyen de réalignement comprenant un ensemble de roulement à billes ayant au moins une couronne à came (28) disposée entre un joint torique (24) et un roulement à billes (22) pour réaligner les axes longitudinaux (B, C) de l'arbre (12) et de l'alésage (16) après ledit mouvement hors d'alignement.

2. Ensemble de tourillon selon la revendication 1, dans lequel l'ensemble de roulement à billes (18) est aussi situé à l'intérieur de l'alésage (16) du logement et entoure l'arbre de tourillon (12), et dans lequel la couronne à came (28) est une première couronne à came et le joint torique (24) est un premier joint torique, et dans lequel l'ensemble de roulement à billes comprend une deuxième couronne à came (28) disposée entre un deuxième joint torique (24) et ledit roulement à billes (22).

3. Ensemble de tourillon selon la revendication 2, dans lequel les joints toriques (24) sont compressibles de manière résiliente, l'arrangement étant tel que le roulement à billes (22) est disposé au centre entre les deux couronnes à came (28), avec les joints toriques (24) disposés des côtés opposés du roulement à billes (22), avec une couronne à came (28) étant disposée entre chaque joint torique (24) et le roulement à billes (22) respectivement.

4. Ensemble de tourillon selon la revendication 3, dans lequel chaque couronne à came (28) définit une surface de came (30) pour buter contre une surface externe du roulement à billes (22), l'arrangement étant tel que lorsque l'arbre de tourillon (12) se déplace hors d'alignement concentrique avec l'alésage (16), l'une des couronnes à came (28) se déplace vers son joint torique (24) pour comprimer celui-ci, l'arrangement étant en outre tel que le joint torique comprimé (24) se dilate après la neutralisation de la force de sollicitation pour redéplacer l'arbre (12) en alignement concentrique avec l'alésage (16).

5. Ensemble de tourillon selon l'une quelconque des revendications 2 à 4, dans lequel les joints toriques (24) sont disposés chacun dans un dispositif de retenue de joint torique (26A, 26B).

6. Ensemble de tourillon selon l'une quelconque des revendications 1 à 5, dans lequel l'ensemble de roulement comprend un ensemble de roulement à billes du type toroïdal (20).

7. Canon équipé d'un ensemble de tourillon selon l'une quelconque des revendications 1 à 6.
